# EUROPEAN PATENT APPLICATION

(11) **EP 0 712 643 A1**
(43) Date of publication of application: **22.05.1996**
(21) Application number: 95307343.4
(22) Date of filing: 16.10.1995
(51) Int. Cl.: A62D 3/00, B09C 1/06, G21F 9/12, C02F 1/28

(54) **Immobilisation of pollutants in and by clay materials**

(30) Priority: 02.11.1994 GB 9422062
(71) Applicant: British Nuclear Fuels PLC, Risley Warrington Cheshire, WA3 6AS (GB)
(72) Inventor: Richardson, Stephen c/o British Nuclear Fuels plc, Seascale, Cumbria CA20 1PG (GB); Sylvester, Paul,, Seascale, Cumbria (GB); Stafford, Christopher J c/o British Nuclear Fuels, Seascale, Cumbria CA20 1PG (GB)
(74) Representative: Goddard, David John

(57) **Abstract**

A method is described for the immobilisation of metal ions within a clay material so as to prevent or decrease their rate of removal therefrom. The method comprises the steps of heating the clay material containing the metal ions to a temperature whereby at least a substantial part of the water of hydroxylation is driven off from the clay so as to produce a permanent and irreversible structure change of the clay mineral material such that an increased proportion of said metal ions are more strongly bonded to the altered clay mineral structure.

## Description

The present invention relates to a method of immobilising pollutants in clay materials and also to a method of decontamination and cleaning up of pollutant spillages by absorption with clay materials.

Smectite-type clays have layered structures comprising alternating layers of tetrahedrally and octahedrally co-ordinated aluminosilicates separated by interlattice hydroxylated and hydrated layers. The layering frequency varies between clays and the precise structure will depend upon the actual chemical composition of the clay-type in question. Clays are known to absorb water and also metal ions where these are present in the water being absorbed. However, where the clay in question is part of or constitutes the geological strata in a geographical region, it is possible for both the absorbed water and any associated metal ions to travel through the clay strata by virtue of the layered structure.

It is an object of the present invention to provide a method of preventing or minimising the possible migration or movement of pollutants through clay. It is a further object of the present invention to provide a method of utilising clay materials to absorb spillages containing pollutants and to subsequently safely deal with the disposal of such materials.

According to the present invention there is provided a method for the immobilisation of metal ions within a clay material so as to prevent or minimise their rate of removal therefrom, the method comprising the steps of heating the clay material containing the metal ions to a temperature whereby at least a substantial part of the water of hydroxylation is driven off from the clay so as to produce a permanent and irreversible structure change of the clay mineral material such that said metal ions are more strongly bonded to the altered clay mineral structure.

It has been found that the dehydration of clay mineral material follows a relatively predictable pattern. When a saturated clay is heated, water of hydration is first driven off. This water is that which is physically combined with the clay and the drying process is usually complete by about 200°C. If longer heating times are involved, the drying process can be completed at significantly lower temperatures. If heating is continued, but at more elevated temperatures in the range from about 220°C to about 750°C, an irreversible structural change is produced within the clay. Heating in this temperature range causes the water of hydroxylation to be driven off. The water of hydroxylation is that water which is chemically combined with the clay and constitutes the hydroxyl bonding between the constituent clay layers. Removal of the water of hydroxylation causes the collapse of the interlattice spaces producing much stronger interlayer bonding and effectively increasing the strength of bonding of any metal ions contained within the lattice and thus preventing or minimising their rate of removal by, for example, leaching with water. Heating at temperatures beyond 750°C causes further irreversible change to the lattice structure with the onset of ceramification of the material. Entrapped metal ions are even more strongly held within the lattice structure under these conditions. Further heating at yet higher temperatures causes vitrification of the material.

Preferably, the temperature of heating is at least 650°C.

It has been found that the method of the present invention produces a highly leach resistant structure within the clay preventing or greatly reducing the rate of removal of pollutant metal ions. The calcined clay is particularly stable and allows relatively easy and safe disposal thereof. The term "calcined" is used herein to refer to clays which have been heated so as to achieve at least partial dehydroxylation and at least partial irreversible collapse of the lattice structure and resultant entrapment of pollutant metal ions.

The pollutant metal ions may be toxic metals such as heavy metal ions such as mercury, lead, cadmium for example, or may be nuclides such as strontium, caesium, uranium for example.

Applications of the method according to the present invention are various and include the immobilisation of pollutants in-situ within a geological clay ground structure. Leachates occur in clay soil environments as a result of many industrial activities including the disposal of wastes and also adventitious leaks to ground. The clays involved may form part of the natural clay soils in the area or as engineered clays in landfill sites. Where such contamination has occurred the method of the present invention provides two alternatives. The first is to remove the contaminated clay and heat in kilns or calciners; the second is to apply a heat source to the area to promote dehydroxylation and/or ceramification.

In the case of applying a heat source to the area in-situ, reference is hereby made to our co-pending patent application number GB9422058.9 filed on even date herewith. This co-pending application describes a method of applying a heat source to the ground by use of a thermite-type chemical reaction to supply heat and to promote ceramification and/or vitrification of the soil to entrap pollutants. The content of this co-pending application is included herein by reference thereto.

The method of the present invention may also be applied to other areas where a clay having had the water of hydration partly or wholly removed may be applied to absorb contaminants in various situations. Examples of such situations are given below.

Settling ponds are used within the nuclear industry for the storage of fuel and in various mining and general industrial operations as a means of either precipitating metals or removing suspended particulates. An air-dried clay may be added to such ponds to sorb any heavy metal ions or nuclides. After it has settled, the clay may be removed by dredging the slurry or dewatering the pond. Alternatively, the pond may be dried completely and the sediment removed and heated so as to drive off the water of hydroxylation in order to produce the desired structural change in the clay lattice and entrap the pollutants therein prior to disposal of the calcined clay material.

Some ponds are used to store highly toxic materials with an overblanket of water. Examples include nuclear fuel, arsenic fines, mercury processing and most heavy metals. In such cases it is necessary to keep the metals and their alteration products either covered with water or, more importantly, away from a source of oxygen. The method of the present invention may be used to provide a clay sorbent which not only dilutes the metal concentration but also to act as an anaerobic blanket over the sediments prior to retrieval and calcining before disposal.

The method of the present invention may be used in a continuous decontaminating process applicable to industrial plants such as in the treatment of effluent streams for the removal of heavy metals for example. Clays may be used in suspension without being allowed to settle out, the separation of the clay from the aqueous phase being achieved by filtration. The solid phase resulting from filtration is retrieved, calcined and disposed of. In this application the low cost of the raw clay material renders such processes economic even though other methods may have greater removal rates.

A further use of the method of the present invention is in the cleaning up of relatively small scale spillages such as may occur in a laboratory or factory for example. An air-dried clay powder may be spread on top of the spillage to absorb the water along with the contaminants. After addition of sufficient clay powder, preferably to form a relatively solid phase rather than a slurry, the wetted clay is retrieved, calcined and thus the contaminants may be permanently entrapped in the calcined clay structure.

Although in some of the above examples the use of a dewatered, air-dried clay has been specified, the clay could be used in the unprocessed condition. However, the use of a dried clay is preferred since the uptake of water for the rehydration of the interlattice layers also promotes the more rapid uptake of metal ions.

Although water has been referred to above, it is envisaged that the method of the present invention may be applicable to the absorption of metal ions in organic solvents.

In order that the present invention may be more fully understood, examples will now be given by way of illustration only with reference to the accompanying drawings, of which:
Figure 1 shows a graph of water loss from a G5 Drigg clay sample heated under dynamic heating conditions;
Figures 2 to 4 show graphs of concentrations of strontium in various leaching solutions for clays preheated at different temperatures;
Figures 5 to 7 show graphs similar to Figures 2 to 4 but for caesium; and
Figures 8 and 9 which show similar graphs to Figure 4 and 5 but for cobalt.

Tests on clay samples will now be described with reference to the Figures.

A sample of raw G5 Drigg clay was air-dried to provide material for further tests. Drigg is a region on the Cumbrian coast of the United Kingdom and is a geographical area having large deposits of this type of clay. The clay is a smectite-type clay having various natural inclusions. The clay sample was air-dried at 105°C. The dried clay was analyzed using X-ray powder diffraction (XRD). The trace from this analysis showed reflections corresponding to quartz, clay minerals, feldspar and possibly goethite and/or haematite.

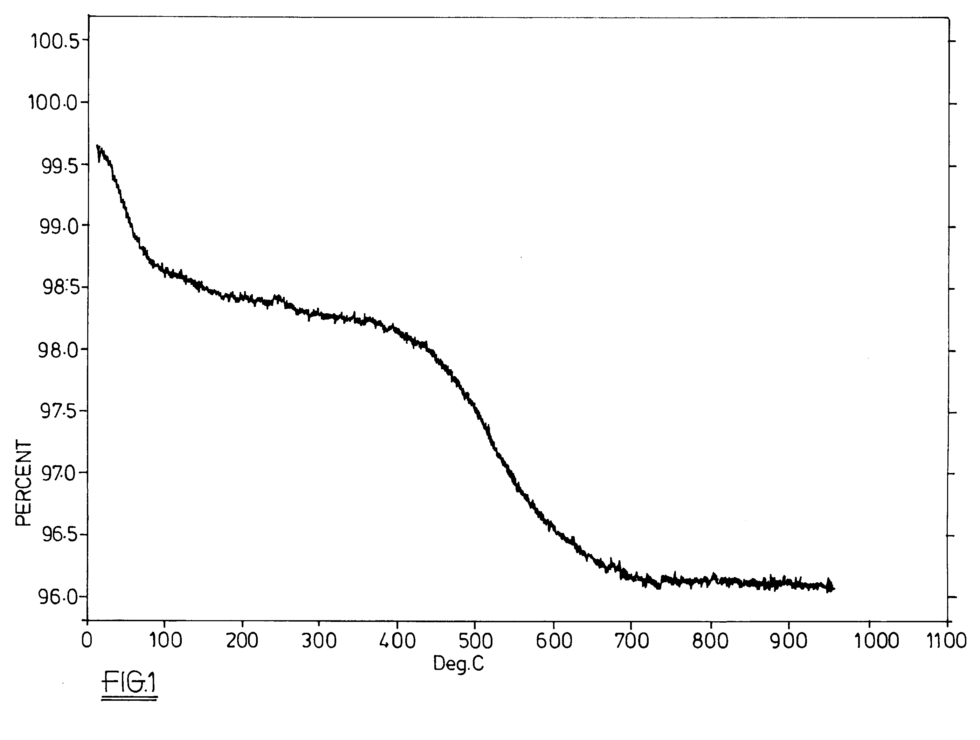

A sample of the above air-dried clay was heated from ambient temperature to 950°C at a heating rate of 10°C/minute under a static air atmosphere during a thermogravimetric analysis experiment. The trace obtained in this experiment is shown in Figure 1. From Figure 1 it may be seen that for this type of natural clay, the onset of dehydroxylation begins at approximately 400°C and is complete at around 600°C. However, it must be born in mind that the trace of Figure 1 represents a dynamic equilibrium with the temperature constantly increasing rather than a static equilibrium and the loss of the hydroxyl groups occurs over a much shorter temperature range than is indicated by Figure 1.

Tests were carried out on samples of clay, air-dried at 105°C, by spiking them with single cations from the group Co2⁺ʼ SR⁺ and Cs⁺ from inactive solutions. Separate samples of G5 clay were spiked with one cation using the following procedure. 25g of the dried clay were stirred for an extended period with 500ml of a 1M solution of the cation nitrate at approximately 60°C. The suspension was then centrifuged, the aqueous solution discarded and fresh metal nitrate solution added and the procedure repeated. The spiked clay sample was washed with water, acetone and dried at 105°C. The samples were coded Co-G5-105, Sr-G5-105 and Cs-G5-105, respectively. Sub-samples of each of these three materials were taken and heated in air at 350°C, 450°C, 550°C and 650°C. Each sample was then contacted with a leaching solution and the leachability of the exchanged cations assessed.

Three solutions were chosen to assess leachability of the spiked and heated clay samples. These were distilled water, 0.1M sodium chloride solution and simulated cementitious leachate. Distilled water was effectively used as a control leachate, since any cation leaching produced would suggest that the sample had been insufficiently washed, or that the affinity of the clay for that particular cation was very small resulting in an appreciable loss from the ion exchange sites, the former being the most probable explanation. The 0.1M sodium chloride solution has a much greater ionic strength than leaching solutions likely to be encountered in practical situations. Consequently, if leaching does not occur with this solution, then it is unlikely that leaching will occur with naturally occurring sodium-rich leachates. It is considered that cations not removed by the leachates used in the tests are irreversibly bound to the heated clay or have extremely high binding energy.

The simulated cementitious leachate consisted of an alkaline solution (pH 10.94) with the predominant cations being Na⁺ and Ca⁺.

The leaching tests were conducted by shaking a small sample of the spiked and heated clay with 50ml of the leachate solution for 18 hours at ambient temperature. The clay was then separated by passing the suspension through a 0.025 µm filter and the aqueous phase analyzed using inductively coupled plasma atomic emission spectrophotometry (ICP-AES).

The spiked clay samples were analyzed using atomic absorption for the caesium spiked samples and ICP-AES for the cobalt and strontium spiked samples. The results were:
Sr-G5-105; Sr = 3.38%w/w;
Cs-G5-105; Cs = 1.33%w/w; and
Co-G5-105; Co = 1.52%w/w.
As a control, a sample of the natural G5 clay was also analyzed for these elements and was found to contain 113ppm Sr, 25ppm Cs and 19ppm Co. These levels were considered to be insignificant compared to those of the spiked clays and were subsequently ignored.

The results of the leaching studies are given below fcr each cation.

### Strontium

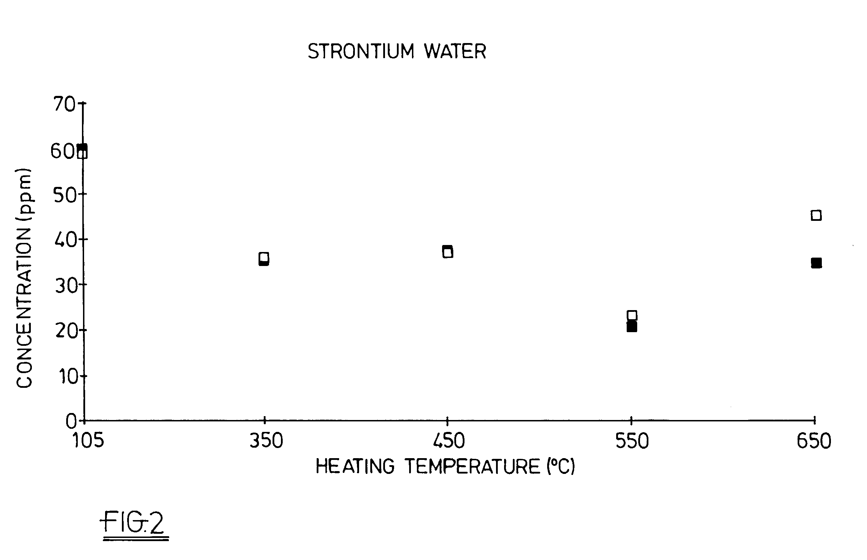

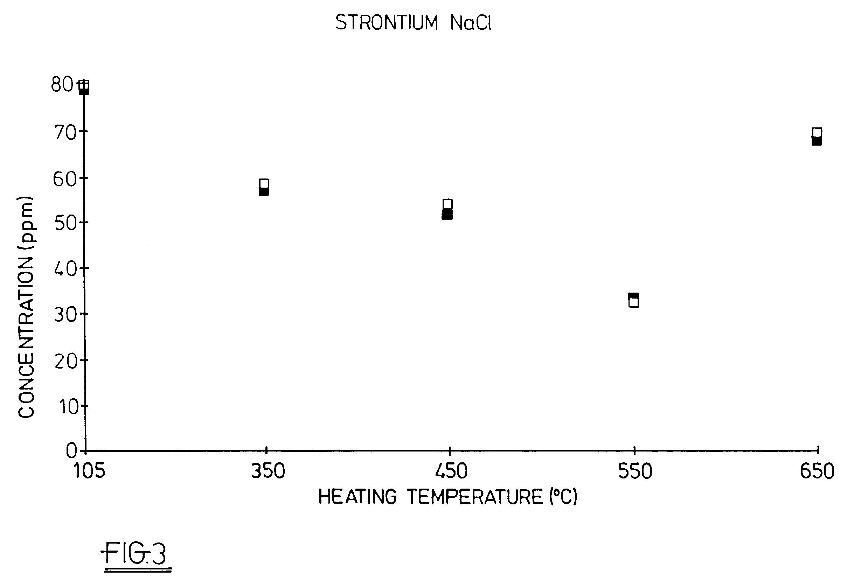

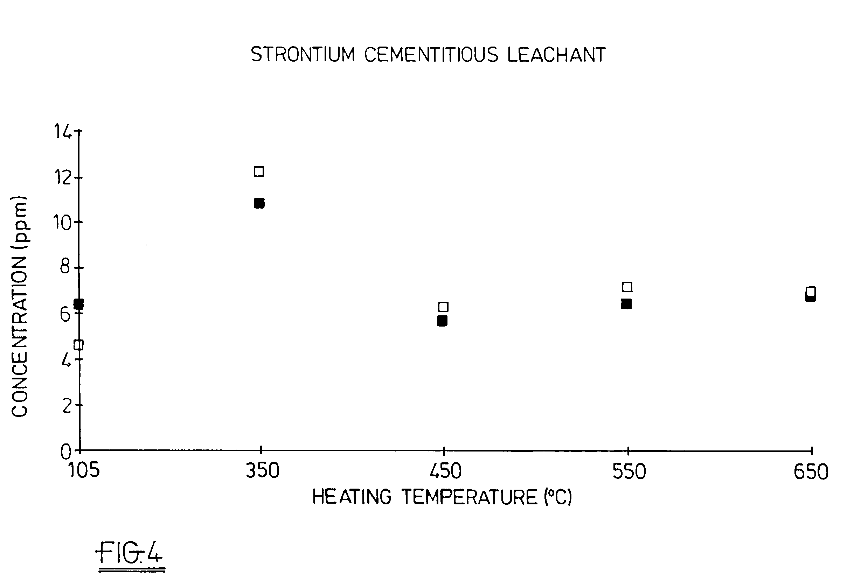

The concentrations of strontium in each of the three leachate solutions as a function of heating temperature are shown in Figures 2 to 4. It may be seen that the graphs showing the water and sodium chloride leachate results demonstrate the same trend. There is a marked decrease in strontium concentration with increasing heating temperature. The concentration of strontium in the cementitious leachate was an order of magnitude lower than in the water and sodium chloride. It is believed that the results obtained at 650°C for water and sodium chloride leachate are anomalous and these tests are to be repeated

### Caesium

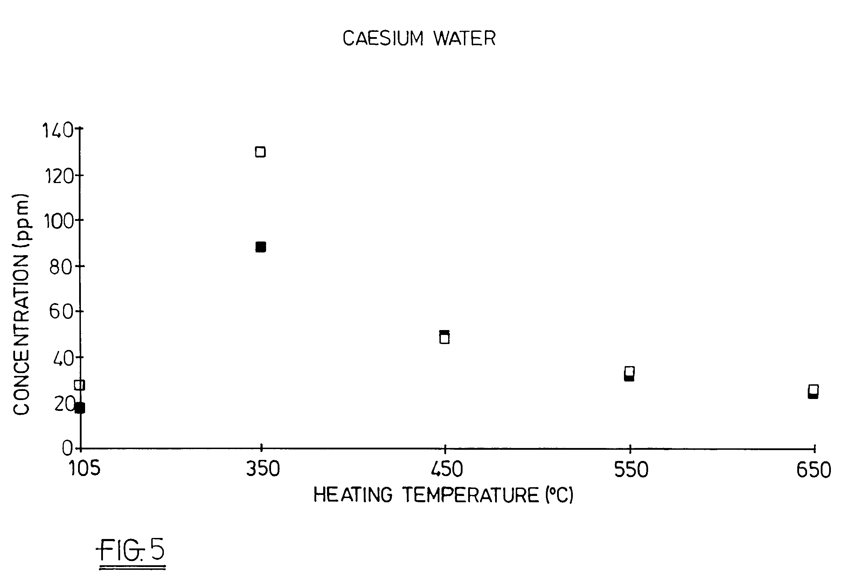

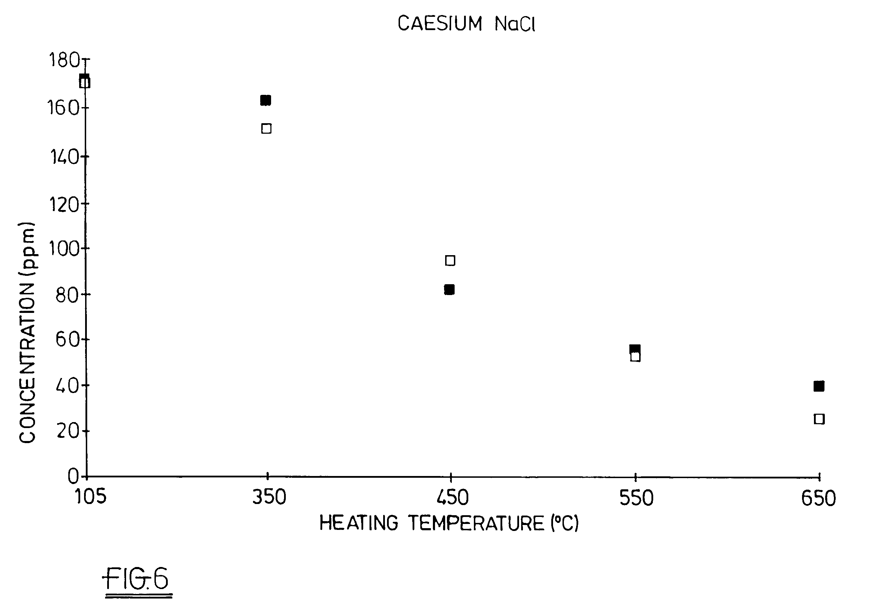

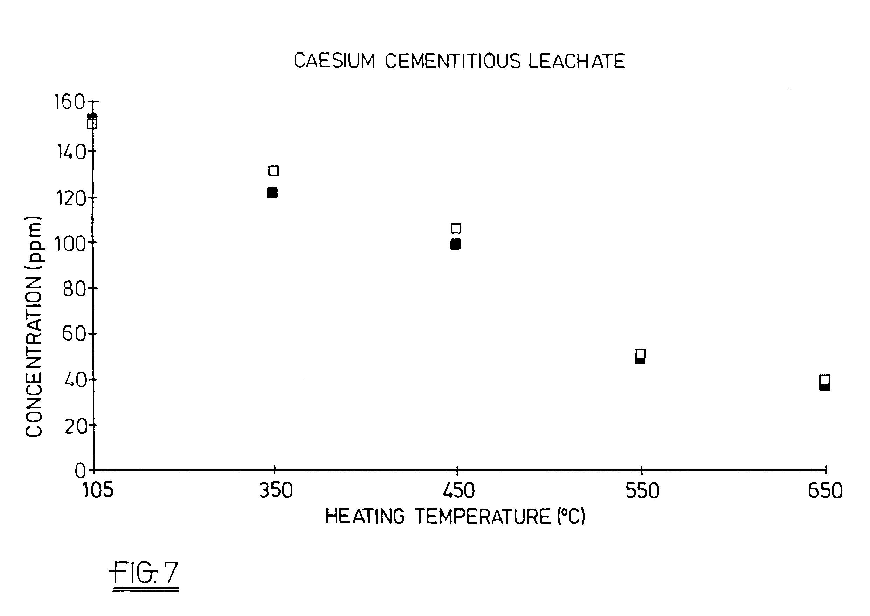

Figures 5 to 7 show the leaching test results for caesium, a decreasing concentration being detected with increasing clay heating temperature.

### Cobalt

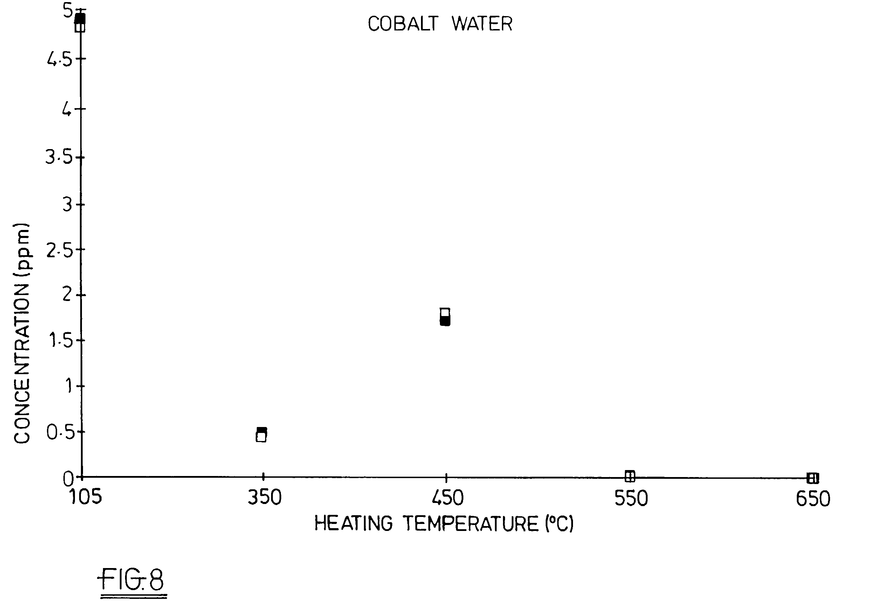

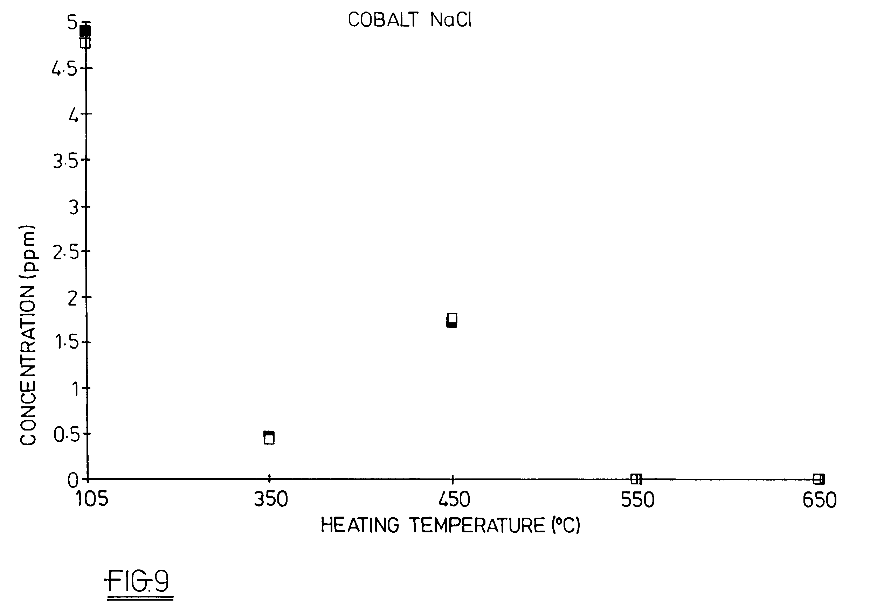

No cobalt was detected in the cementitious leachate for any of the samples heated at different temperatures, and therefore, no graph is given of the results. Figures 8 and 9 show the results for water and sodium chloride, respectively. As may be see from Figures 8 and 9, no cobalt was detected in the samples heated at 550°C and 650°C.

From the results it may be seen that the maximum strontium concentration detected was about 80ppm whereas if all of the available strontium had been leached from the clay, the concentration would have been approximately 676ppm. Therefore, it is clear that the method of the present invention results in a considerable increase in the ability of the clay to retain pollutants. Similar results were observed for the cobalt spiked samples. In the case of caesium, more of the available ions were leached from the clay and this is in accordance with ion-exchange theory in the case of a large monovalent ion such as caesium. However, it is also clear from Figures 5 to 7 that the retention of caesium ions in the clay increases with increasing heating temperature and thus, the rate of removal of the caesium ions has been significantly decreased.

## Claims

1. A method for the immobilisation of metal ions within a clay material so as to prevent or decrease their rate of removal therefrom, the method being characterised by comprising the steps of heating the clay material containing the metal ions to a temperature whereby at least a substantial part of the water of hydroxylation is driven off from the clay so as to produce a permanent and irreversible structure change of the clay mineral material such that an increased proportion of said metal ions are more strongly bonded to the altered clay mineral structure.

2. A method according to claim 1 wherein the temperature of heating is at least 650°C.

3. A method according to claim 1 wherein the immobilisation of pollutants is in-situ within a geological clay ground structure.

4. A method according to claim 2 wherein the immobilisation of pollutants is in-situ within a geological clay ground structure.

5. A method according to claim 1 or claim 2 wherein a clay having had the water of hydration partly or wholly removed is applied to absorb contaminants and is subsequently heated.

6. A method according to claim 6 wherein a clay is applied to a settling pond, the clay being subsequently removed from said settling pond with the pollutant therein and heated.

7. A method according to claim 1 or claim 2 wherein a clay is used in suspension to remove pollutant ions, said clay is then separated from the aqueous phase by filtration, the solid phase resulting from filtration is retrieved, heated and disposed of.

8. A method according to either claim 1 or claim 2 wherein a dried clay powder is spread on top of a spillage to absorb the water and contaminants.

9. A method according to any one preceding claim wherein the pollutant metal ions are in an organic medium.
